# EUROPÄISCHE PATENTSCHRIFT

(11) **EP 1 057 686 B1**
(45) Veröffentlichungstag und Bekanntmachung des Hinweises auf die Patenterteilung: **15.03.2006**
(21) Anmeldenummer: 00106512.7
(22) Anmeldetag: 25.03.2000
(51) Int. Cl.: B60K 28/10

(54) **Gangschaltung für Kraftfahrzeuge**
Gear shift for motor vehicle
Changement de vitesse pour véhicule à moteur

(30) Priorität: 05.06.1999 DE 19925758
(43) Veröffentlichungstag der Anmeldung: 06.12.2000
(73) Patentinhaber: WABCO GmbH & CO. OHG, 30453 Hannover (DE)
(72) Erfinder: Böhm, Andreas, 30974 Wennigsen (DE); Wistrach, Michael, 38102 Braunschweig (DE)
(74) Vertreter: Schrödter, Manfred

(56) Entgegenhaltungen:
- EP-A- 0 526 985
- US-A- 3 756 358
- US-A- 4 295 540
- US-A- 5 251 733
- US-A- 5 301 565
- PATENT ABSTRACTS OF JAPAN vol. 1997, no. 10, 31. Oktober 1997 (1997-10-31) -& JP 09 169224 A (SEIREI IND CO LTD), 30. Juni 1997 (1997-06-30)
- PATENT ABSTRACTS OF JAPAN vol. 012, no. 340 (M-740), 13. September 1988 (1988-09-13) -& JP 63 101140 A (SEIREI IND CO LTD), 6. Mai 1988 (1988-05-06)
- PATENT ABSTRACTS OF JAPAN vol. 012, no. 471 (M-773), 9. Dezember 1988 (1988-12-09) & JP 63 192623 A (MAZDA MOTOR CORP), 10. August 1988 (1988-08-10)
- PATENT ABSTRACTS OF JAPAN vol. 011, no. 258 (M-618), 21. August 1987 (1987-08-21) -& JP 62 064631 A (NISSAN SHATAI CO LTD), 23. März 1987 (1987-03-23)

## Beschreibung

Die Erfindung bezieht sich auf eine halbautomatische Gangschaltung für Kraftfahrzeuge, insbesondere für Nutzfahrzeuge mit Dieselmotor gemäß dem Oberbegriff des Patentanspruchs 1.

Kraftfahrzeuge mit Dieselmotor werden bekanntlich so gestartet, daß der Zündschlüssel zunächst in eine Vorglüh-Stellung geschaltet wird. Dann muß eine bestimmte Zeit abgewartet werden, bis der Vorglüh-Vorgang abgeschlossen ist. Anschließend kann der Schlüssel weitergedreht werden, wodurch der elektrische Anlasser des Motors eingeschaltet wird. Durch diesen Startvorgang wird der Dieselmotor in Gang gesetzt und läuft anschließend mit Leerlaufdrehzahl weiter. Bei manchen Fahrzeugen wird der Anlasser auch nicht durch den Zündschlüssel, sondern durch einen besonderen Knopf betätigt.

Unter einer halbautomatischen Gangschaltung wird hier eine Gangschaltung verstanden, bei der noch eine vom Fahrer zu betätigende Kupplung vorhanden ist. Die Gänge werden mit einem elektrischen Geber eingelegt bzw. vorgewählt. Der Geber kann z. B. als Schritt-Schalter ausgebildet sein. Zwischen Geber und Getriebe ist keine mechanische Verbindung mehr vorhanden. Die Übermittlung der Schaltsignale erfolgt statt dessen über elektrische Leitungen ("shift by wire"). Der Fahrer erhält durch den Geber keine unmittelbare Information darüber, ob gerade ein Gang eingelegt ist.

Bei dem geschilderten Anlaßvorgang ist es nun unbedingt nötig, daß entweder das Getriebe in der Neutralstellung steht, oder die Kupplung getreten (d. h. gelöst) ist. Wenn nämlich irrtümlicherweise beim Startvorgang des Motors die Hauptkupplung geschlossen ist und gleichzeitig ein Gang eingelegt ist, besteht die Gefahr, daß das Fahrzeug sich sprungartig in Bewegung setzt, der Motor abgewürgt wird, öder das Getriebe beschädigt wird.

Eine Gefahr, daß ein Fahrer Kupplungsstellung und Getriebestellung vor dem Motorstart nicht nochmals kontrolliert, besteht besonders bei Fahrzeugen mit einem halbautomatischen Getriebe (SBW = shift by wire).

Aus der JP-A-09169224 ist eine Schutzvorrichtung zum Starten von Arbeitsmaschinen, insbesondere Erntemaschinen bekannt. Derartige Maschinen haben Hilfsantriebe zum Betreiben von verschiedenen Arbeitsgeräten, die von dem Hauptantriebsmotor der Maschine über eigene Kupplungen mit antreibbar sind.

Um zu verhindern, dass beim Starten des Hauptmotors diese Arbeitsgeräte unbeabsichtigt anspringen, wird vor dem Starten des Motors geprüft, ob die Kupplungen der Arbeitsmaschinen getrennt sind. Falls dies nicht der Fall ist, wird eine Warnanzeige angesteuert. Falls die Kupplungen nicht getrennt sind, wird außerdem ein Starten des Motors nicht zugelassen.

Der Erfindung liegt die Aufgabe zugrunde, den oben beschriebenen gefährlichen Fahrzustand möglichst zu vermeiden.

Diese Aufgabe wird durch die im Patentanspruch 1 enthaltene Erfindung gelöst. Die Unteransprüche enthalten zweckmäßige Weiterbildungen.

Durch die Ergänzung der halbautomatischen Gangschaltung mit dem erfindungsgemäßen Kupplungs-Signalgeber wird auch ein unaufmerksamer Fahrer nochmals dazu aufgefordert, vor dem Anlassen des Motors die Kupplung zu treten.

Es ist zwar bereits eine Getriebesteuerung mit einer Warnanzeige (Display) für den Zustand der Kupplung bekannt (EP 0 884 212 A1). Hier verfolgt die Kupplungs-Anzeige jedoch einen anderen Zweck, und zwar wird der Fahrer hier davor gewarnt, daß die Hauptkupplung nicht richtig geschlossen ist.

Die Erfindung wird im folgenden anhand einer Zeichnung näher erläutert. Dargestellt ist in schematischer Weise ein Blockschaltbild einer halbautomatischen Gangschaltung in einem Kraftfahrzeug.

Ein Motor (1) ist über eine Hauptkupplung (3) mit einem Getriebe (2) verbunden. Das Getriebe ist ausgangsseitig mit Antriebsrädern (4) verbunden.

Das Getriebe wird von einer'Getriebesteuer-Elektronik (5) gesteuert. Die mit einem oder mehreren Mikroprozessoren (µP) ausgerüstete Getriebesteuer-Elektronik (5) erhält über eine Leitung (9) eine Information über die Drehzahl des Motors (1). Gegebenenfalls kann über die Leitung (9) auch die Drehzahl des Motors (1) beeinflußt werden. Über eine weitere Leitung (10) erhält die Getriebesteuer-Elektronik (5) eine Information über den Schaltzustand der Hauptkupplung (3). Es kann z. B. durch einen Taster (nicht dargestellt) ermittelt werden, ob die Kupplung (3) geschlossen oder geöffnet ist. Über eine weitere Leitung (11) erhält die Getriebesteuer-Elektronik (5) Informationen über den jeweiligen Schaltzustand des (fremdkraftgesteuerten) Getriebes (2). Über dieselbe Leitung (11) können dem Getriebe auch Schaltbefehle zugeführt werden. Weiter können über die Leitung (11) Eingangs- und Ausgangsdrehzahl des Getriebes (2) abgefühlt werden.

Die jeweilige Schaltstellung der Kupplung (3) kann anstatt mit einem (aufwendigen) extra Sensor auch über die Eingangs- und Ausgangsdrehzahlen der Kupplung (3) bestimmt werden. Die Kupplung (3) gilt dann als geschlossen, wenn beide Drehzahlen gleich sind. In diesem Fall kann die Stellung der Kupplung aber erst nach Anlauf des Motors geprüft werden.

Der Getriebesteuerung (5) wird weiter eine Information über die Stellung eines Zündschlüssels (6) zugeführt. Weiter ist die Getriebesteuer-Elektronik (5) mit einem Schaltbefehlsgeber (7) verbunden, durch welchen Gänge eingeschaltet oder vorgewählt werden können. Schließlich ist die Getriebesteuer-Elektronik (5) mit einem Signalgeber (8) verbunden.

Die Funktionsweise der erfindungsgemäßen Gangschaltung ist so, daß in der Elektronik (5) nach dem Einschalten des Zündschlüssels (6) während des Vorglühens des Motors geprüft wird, ob das Getriebe (2) in der Neutralstellung steht, oder die Kupplung (3) betätigt; d. h. geöffnet ist. Falls dies nicht der Fall ist, wird der Signalgeber (8) angesteuert. Hierdurch wird der Fahrer aufgefordert, nach dem Einschalten der Zündung, aber vor dem eigentlichen Starten des Motors (1), die Kupplung (3) zu betätigen. Dies erfolgt aber nur, wenn tatsächlich ein gefährlicher Zustand vorliegt.

Zweckmäßig wird der Signalgeber (8) als Display ausgeführt, wobei dieses ein nicht blinkendes "CL" (für Clutch) anzeigt.

Es ist aber natürlich auch möglich, eine Warnlampe, einen Warnton, oder ein blinkendes Display vorzusehen.

Die Warnung erlischt, sobald der Motor gestartet ist.

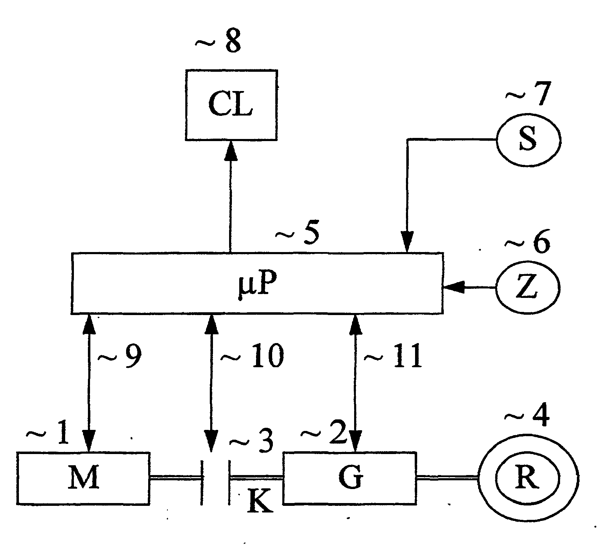

## Patentansprüche

1. Halbautomatische Gangschaltung für ein Nutzfahrzeug mit Dieselmotor (1), wobei der Motor (1) über eine Hauptkupplung (3) mit einem Getriebe (2) verbunden ist, **gekennzeichnet durch** folgende Merkmale:
a) Nach dem Einschalten des Zündschlüssels (6) während des Vorglühens wird von einer Getriebesteuer-Elektronik (5) geprüft, ob das Getriebe (2) in der Neutralstellung steht, oder ob die Kupplung (3) betätigt ist;
b) falls das Getriebe (2) nicht in der Neutralstellung steht, oder die Kupplung (3) nicht betätigt ist, wird ein Signalgeber (8) angesteuert, der den Fahrer auffordert, nach dem Einschalten der Zündung, aber vor dem eigentlichen Starten des Motors (1) die Kupplung (3) zu betätigen.

2. Gangschaltung nach Anspruch 1, **dadurch gekennzeichnet, dass** als Signalgeber (8) ein Display angesbeuert wird.

3. Gangschaltung nach Anspruch 2, **dadurch gekennzeichnet, dass** das Display ein nicht blinkendes "CL" anzeigt.

## Claims

1. Semi-automatic gear shift for a utility vehicle having a diesel engine (1), wherein the engine (1) is connected to a gearbox (2) by way of a main clutch (3), **characterised by** the following features:
a) after the ignition key (6) has been switched on, during preheating, a check is carried out by a gearbox control electronics unit (5) as to whether the gearbox (2) is in the neutral position or the clutch (3) has been actuated;
b) if the gearbox (2) is not in the neutral position or if the clutch (3) has not been actuated, a signal transmitter (8) is triggered, which calls upon the driver, after switching on the ignition but before actuatly starting the engine (1), to actuate the clutch (3).

2. Gear shift according to claim 1, **characterised in that**, as the signal transmitter (8), a display is triggered.

3. Gear shift according to claim 2, **characterised in that** the display shows a non-flashing "CL".

## Revendications

1. Changement de vitesse semi-automatique pour un véhicule utilitaire à moteur diesel (1), le moteur (1) étant relié à une transmission (2) par l'intermédiaire d'un embrayage principal (3), **caractérisé par** les caractéristiques suivantes:
a) après la fermeture de la clé de contact (6), on vérifie durant le pré-allumage à l'aide d'une électronique de commande de transmission (5), si la transmission (2) se trouve au point mort, ou si l'embrayage (3) est actionné;
b) dans le cas où la transmission (2) n'est pas au point mort, ou si l'embrayage (3) n'est pas actionné, un générateur de signaux (8) est commandé, qui invite le conducteur, après la fermeture de la clé de contact, mais avant le démarrage proprement dit du moteur (1), à actionner l'embrayage (3).

2. Changement de vitesse selon la revendication 1, **caractérisé en ce qu'**en tant que générateur de signaux (8) un affichage est commandé.

3. Changement de vitesse selon la revendication 2, **caractérisé en ce que** l'affichage indique un "CL" non clignotant.
